(19) Europäisches Patentamt
European Patent Office
Office européen des brevets

(11) **EP 1 837 661 A1**

(12) **EUROPÄISCHE PATENTANMELDUNG**

(43) Veröffentlichungstag:
26.09.2007 Patentblatt 2007/39

(51) Int Cl.:
***G01P 5/00*** *(2006.01)*

(21) Anmeldenummer: 06005621.5

(22) Anmeldetag: **20.03.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(71) Anmelder: **General Acoustics GmbH**
**24106 Kiel (DE)**

(72) Erfinder:
• **Dr Müller, Volker**
**18119 Diedrichshagen (DE)**

• **Eden, Hendrik**
**24161 Altenholz (DE)**
• **Henße, Jens**
**21698 Harsefeld (DE)**
• **Dr Behrendt, Wernher**
**1010 Wien (AT)**

(74) Vertreter: **Wegner, Hans**
**Patent- und Rechtsanwälte**
**Bardehle - Pagenberg - Dost**
**Altenburg - Geissler**
**Postfach 86 06 20**
**81633 München (DE)**

(54) **Fluiddynamisches Messverfahren**

(57)    Die vorliegende Erfindung betrifft ein Verfahren zur Vermessung eines zweidimensionalen oder dreidimensionalen Strömungsfeldes (50), aufweisend die folgenden Schritte: (a) Messung (10) der lokalen Strömungsgeschwindigkeit des Strömungsfeldes (50) an mehreren bestimmten Orten und/oder zu mehreren bestimmten Zeiten, um zeitlich und örtlich definierte Messwerte (6) zu erhalten (b) Interpolieren der Messwerte (6) auf örtliche Bereiche, in denen keine Messung durchgeführt wurde, mittels eines in einer Auswerteeinheit ablaufenden örtlichen Interpolationsverfahrens, das auf einem fluiddynamischen Modell basiert; und/oder (c) Interpolieren der Messwerte (6) in zeitlicher Hinsicht auf Zeitpunkte, in denen keine Messung durchgeführt wurde, mittels eines in einer Auswerteeinheit ablaufenden zeitlichen Interpolationsverfahrens, das auf einem fluiddynamischen Modell basiert; (d) Darstellen der interpolierten Messwerte (7) und/oder abgeleiteter Kenngrößen als eindimensionales oder mehrdimensionales Strömungsfeld.

Das Modell basiert auf einer Formulierung, der Navier-Stokes-Gleichung, die die Poisson-Gleichung für die Strömung und den Transport von Wirbeln beschreibt. Als Basis für die Interpolation genügen gemessene Geschwindigkeitswerte sowie deren Gradienten.

Fig. 2

EP 1 837 661 A1

**Beschreibung**

**1. Gebiet der Erfindung**

Die vorliegende Erfindung betrifft das Gebiet der Strömungsmesstechnik, insbesondere die Vermessung eines eindimensionalen oder mehrdimensionalen Strömungsfeldes.

**2. Stand der Technik**

Experimentelle Untersuchungen zur Aufklärung von Strömungsphänomenen benutzen verschiedenste Methoden oder Verfahren der Strömungsmesstechnik. Zielstellung der Messungen ist im Allgemeinen die eindimensionale (lininenhafte) oder mehrdimensionale (zweidimensionale bzw. dreidimensionale) Vermessung eines Strömungsfeldes.

Die einsetzbaren Messmethoden ermöglichen allerdings meist nur eine teilweise Vermessung des Strömungsfeldes. Ausnahmen sind im weitestgehenden Sinne fotografische Verfahren wie die Particle-Image-Velocimetry (PIV), die Schlierenfotografie oder ähnliche Verfahren. Diese Verfahren sind allerdings oft nur unter Laborbedingungen anwendbar.

Für Strömungsmessungen im freien Feld werden entweder punktweise Messverfahren (z.B. die Windmessung mittels Windanemometer oder Flügelradanemometer) oder linienweise Messverfahren (z.B. Messungen nach dem Dopplerprinzip z.B. akustische Doppler Geschwindigkeitsmesser, Laser-Doppler Geschwindigkeitsmesser, Radar) eingesetzt.

Eine zeitgleiche (isochrone) Messung zweidimensionaler oder dreidimensionaler Strömungsfelder ist unter Freifeldbedingungen nicht oder nur mit großem Aufwand möglich. Daher werden die Ergebnisse der Punkt- bzw. Linienmessungen als Stützstellen mathematischer Interpolationsmethoden verwendet, um zu flächenhaften- und/oder räumlichen Aussagen zu gelangen. Im Folgenden werden einige dieser prinzipiellen Mess- und Auswerteverfahren erläutert.

Ein erstes Messverfahren betrifft die flächenhafte Strömungsmessung z.B. mittels Particle-Image-Velocimetry (PIV). Derartige Verfahren benutzen zur Messung der Strömungsgeschwindigkeit Verfahren der Korrelation zwischen nacheinander aufgenommenen Bildern des Untersuchungsgebietes. Dieses Untersuchungsgebiet muss dazu mit abbildbaren Partikeln gefüllt sein, die der Strömung schlupffrei folgen.

Aus einer Korrelation der Partikelverteilung aufeinander folgender Bilder wird dann bei bekanntem Zeitunterschied der Aufnahmen das Feld der Strömungsgeschwindigkeit berechnet. Der Nachteil der PIV-Verfahren liegt darin, dass das zu untersuchende Feld nicht zu 100% mit abbildbaren Partikeln gefüllt werdend kann und diese Partikel das Strömungsverhalten selbst beeinflussen. Insbesondere wirkt sich eine unzureichende Füllung des Feldes mit abbildbaren Partikeln negativ bei der Untersuchung wirbelbehafteter Strömungen aus.

Ein weiteres Messverfahren betrifft die linienhafte Strömungsmessung z.B. mttels akustischer Doppler-, Laser-Doppler-, oder Radar-Verfahren. Bei diesen Verfahren wird zumeist mittels eines Dopplerverfahrens entlang einer Messlinie zeitgleich (isochron) und in diskreten Abständen die Strömungsgeschwindigkeit eines zu untersuchenden Feldes gemessen. Der Nachteil dieser Verfahren ist, dass entlang dieser Messlinie zeitgleiche Messdaten mit hinreichender örtlicher Dichte vorliegen, diese Messdaten aber für benachbarte Gebiete nicht bestimmbar sind.

Dies liegt zum einen daran, dass sich eng benachbarte linienhafte Messungen gegenseitig negativ beeinflussen. Zum anderen können auf Grund des hohen Aufwandes nicht zeitgleich unendlich viele linienhafte Messungen durchgeführt werden. Damit ist beim Einsatz linienhafter Messverfahren messtechnisch nicht die Möglichkeit der flächenhaften zeitgleichen (isochronen) Vermessung eines Strömungsfeldes gegeben.

Ein weiteres Messverfahren verwendet die punktweise Strömungsmessung, z.B. mittels Hitzdraht-, Flügelrad-, akustisches Doppler-, Laser-Doppler-Anemometer oder Laser-Zwei-Fokus-Verfahren. Diese Messverfahren sind die derzeit gebräuchlichsten. Sie basieren auf den unterschiedlichsten Messmethoden und ermöglichen die Messung der Strömungsgeschwindigkeit an einem Ort zu einem Zeitpunkt. Die für die linienhaften Messverfahren genannten Nachteile ergeben sich bezüglich der Vermessung von Gebieten in noch höherem Maße.

Der entscheidende Nachteil aller bisher praktikabel eingesetzten Strömungsmessverfahren liegt darin, dass es nicht möglich ist, eine flächendeckende und/oder räumlich deckende Vermessung eines zu untersuchenden Gebietes zu erreichen. Daher werden mathematische Interpolationsmethoden eingesetzt, um eine entsprechende flächendeckende oder räumliche Informationen zu erhalten. Diese mathematische Interpolation kann allerdings derart fehlerbehaftet sein, so dass die ermittelten Ergebnisse in keinster Weiser mit der Realität übereinstimmen. Dies tritt insbesondere dann auf, je weniger Messwerte für das zu unersuchende Gebiet vorhanden sind.

Dafür bislang eingesetzte Verfahren der mathematischen Interpolation (lineare Interpolation, Spline-Interpolation, etc.) erweisen sich allerdings bei räumlich und zeitlich veränderlichen Strömungen oft als unzulänglich, da physikalische Strömungsphänomene, wie beispielsweise Wirbel, mit rein mathematischen Verfahren nicht erfasst werden können.

Eine andere vorbekannte Möglichkeit zur Berechnung und Darstellung von Strömungsfeldern ist die numerische Simulation mit. Dort werden physikalische Modelle numerisch unter Annahme von wenigen Randbedingungen durchgerechnet.

Die Randbedingungen, die in diese numerischen Simulationen eingehen, können aus Messdaten gewonnen werden. Die Ergebnisse sind zumeist physikalisch verständlicher (z.B. ist der Einfluss von Wirbeln besser erfassbar) als bei mathematischen Interpolationen. Allerdings ist der Berechungsaufwand beträchtlich (bis zu mehreren Stunden oder Tage) und es wird lediglich ein theoretisch mögliches Ergebnis erhalten, das wiederum mit der Realität in keinster Weise übereinstimmen muss.

Eine Berechnung in Echtzeit, die während der Messungen durchgeführt wird ist mit numerischen Simulationsverfahren aufgrund des beträchtlichen Berechnungsaufwandes nicht möglich.

Die vorliegende Erfindung stellt sich die Aufgabe ein Verfahren zur Messung, Planung und Auswertung von Strömungsmessungen bereitzustellen, welches eine schnelle oder sogar Echtzeit- (Realtime-) Auswertung der Messdaten ermöglicht. Weiterhin soll mit dem Messverfahren ein Vergleich mit theoretischen oder numerisch gewonnen Strömungsdaten ermöglicht werden.

Eine weitere Aufgabe besteht darin ein Messverfahren bereitzustellen, das wesentlich realitätsgetreuere bzw. präzisere Ergebnisse liefert, das kostengünstig zu realisieren ist und das zudem benutzerfreundlich ist.

## 3. Zusammenfassung der Erfindung

Die oben genannten Aufgaben werden gelöst mittels eines Verfahrens zur Vermessung eines ein- oder mehrdimensionalen Strömungsfeldes gemäß Patentanspruch 1 sowie durch ein entsprechendes Messsystem gemäß Patentanspruch 8.

Insbesondere werden die oben genannten Aufgaben durch ein Verfahren zur Vermessung eines zweidimensionalen oder dreidimensionalen Strömungsfeldes gelöst, aufweisend die folgenden Schritte:

a) Messung der lokalen Strömungsgeschwindigkeit des Strömungsfeldes an mehreren bestimmten Orten und/oder zu mehreren bestimmten Zeiten, um zeitlich und örtlich definierte Messwerte zu erhalten;

b) Interpolieren der Messwerte auf örtliche Bereiche, in denen keine Messung durchgeführt wurde, mittels eines in einer Auswerteeinheit ablaufenden örtlichen Interpolationsverfahrens, das auf einem fluiddynamischen Modell basiert; und/oder

c) Interpolieren der Messwerte in zeitlicher Hinsicht auf Zeitpunkte, in denen keine Messung durchgeführt wurde, mittels eines in einer Auswerteeinheit ablaufenden zeitlichen Interpolationsverfahrens, das auf einem fluiddynamischen Modell basiert;

d) Darstellen der Messwerte und der interpolierten Messwerte und/oder abgeleiteter Kenngrößen als eindimensionales oder mehrdimensionales Strömungsfeld.

Mit dem hier beschriebenen Verfahren ist es möglich, aus vorliegenden Messungen der Strömungsgeschwindigkeit synoptische Darstellungen der Strömungsgeschwindigkeit (flächenhaft- und/oder räumlich) auf der Grundlage eines Interpolationsverfahrens, zu berechnen das auf einem fluiddynamischen Modell basiert. Damit unterscheidet es sich zum einen grundsätzlich von den klassischen mathematischen Interpolationsverfahren, wie beispielsweise der linearen- oder Spline-Interpolation, die nicht auf fluiddynamischen Modellen basieren und damit die physikalischen Vorgänge in Strömungsfeldern nicht zutreffend beschreiben können. Zum anderen unterscheidet sich das erfindungsgemäße Verfahren von numerischen Simulationen, dadurch dass tatsächliche Messwerte verwendet werden, um ein tatsächliches Strömungsfeld zu berechnen und nicht nur wenige Randbedingungen und theoretische Annahmen zur Simulation eines theoretisch möglichen Feldes verwendet werden. Die berechneten Strömungsfelder sind daher wesentlich realitätsgetreuer als bei Verfahren nach dem Stand der Technik und das Verfahren liefert präzisere Ergebnisse.

Dabei müssen die Grundgleichungen der Strömungsmechanik im Rahmen des hier beschriebenen Verfahrens nicht explizit gelöst werden, da das Interpolationsverfahren auf Elementarlösungen und Elementarzusammenhängen der Strömungsmechanik zurückgreifen kann.

Weiterhin müssen keine rechenintensiven und zeitintensiven numerischen Strömungssimulationen durchgeführt werden. Stattdessen sind die interpolierten Strömungsfelder selbst mit handelsüblichen Computern als Auswerteeinheit sofort berechenbar und darstellbar. Damit wird eine Echtzeit- Darstellung von zweidimensionalen oder dreidimensionalen Strömungsfeldern schon während der eigentlichen Messung direkt vor Ort möglich. Da das Verfahren auf handelsüblichen Computern als Auswerteeinheit ablaufen kann und keine Supercomputer erfordert, ist es in der Anwendung besonders kostengünstig.

Weiterhin können auch aus den Strömungsfeldern abgeleitete Kenngrößen berechnet und dargestellt werden, beispielsweise weitere physikalische Parameter, wie Drücke, Zustände oder daraus folgende Warnhinweise für die Anwender.

Das das Messverfahren durch seinen schnellen Ablauf dem Anwender eine sofortige Rückmeldung und Auswertemöglichkeit bietet, ist es besonders benutzerfreundlich. Zudem benötigt es verglichen insbesondere mit numerischen Simulationen nur wenige Interaktionen des Anwenders und kann quasi automatisch Ablaufen.

In einem bevorzugten Verfahren basiert das fluiddynamische Modell der örtlichen und/oder zeitlichen Interpolationsverfahren auf einer Stromfunktions-Rotations-Formulierung der Navier-Stokes-Gleichung. Das Verfahren der fluiddynamischen Interpolation basiert damit bevorzugt auf der Beschreibung zweidimensionaler inkompressibler Strömungen mittels der Stromfunktions-Rotations-Formulierung (auch als Stromfunktions-Vorticity-Formulierung bezeichnet) der Navier-Stokes-Gleichung. Dabei entstehen aus der einen Navier-Stokes-Gleichung in der Stromfunktions-Rotations-Formulierung zwei Gleichungen, nämlich die Poissongleichung für die Stromfunktion und die Wirbeltransportgleichung, wobei beide Gleichungen miteinander gekoppelt sind.

Bevorzugt legen die Messwerte und deren zeitlichen und/oder deren örtlichen Ableitungen alle notwendigen Randbedingungen für die Lösung der Stromfunktions-Rotations-Formulierung der Navier-Stokes-Gleichung fest. Damit kann das gekoppelte Differentialgleichungssystem der Stromfunktions-Rotations-Formulierung der Navier-Stokes-Gleichung gelöst werden.

Der unmittelbare Vorteil der Anwendung dieses Verfahrens beruht in der Abwesenheit der Notwendigkeit den Gesamtdruck zu messen oder zu berechnen. Allein aus der Messung der Strömungsgeschwindigkeit und seiner zeitlichen und örtlichen Schwankungen können die für die Lösung des Gleichungssystems benötigten Randbedingungen beschafft werden. Die Messwerte (Strömungsgeschwindigkeiten) bzw. daraus abgeleitete Größen (Gradienten der Strömungsgeschwindigkeiten an den Messorten) sind die Randbedingungen des Verfahrens.

In einem bevorzugten Verfahren umfasst der zeitliche und örtliche Interpolationsschritt den Teilschritt des Zusammenfassens zeitlich kontinuierlicher Messungen in diskrete Messzeitpunkte. Vergleichsweise nahe beieinander liegende Messungen werden als zeitgleich betrachtet.

In einem weiteren bevorzugten Verfahren umfasst der zeitliche und örtliche Interpolationsschritt den Teilschritt des Bestimmens der örtlichen Gradienten der Strömungsgeschwindigkeit. Aus den Strömungsgeschwindigkeiten werden die Gradienten (Ableitungen) berechnet, die der Beschleunigung der Strömung an dieser Stelle entsprechen.

Bevorzugt umfasst der zeitliche und örtliche Interpolationsschritt weiterhin die folgenden Teilschritte:

a) Extrapolieren der Messwerte auf ein Gitter von Interpolationspunkten; und

b) Interpolieren zwischen den schon mit Daten belegten Interpolationspunkten für einen Zeitpunkt T des Untersuchungszeitraums.

Die Messwerte werden auf alle gewünschten Interpolationspunkte im zu untersuchenden Gebiet interpoliert.

In einem weiteren bevorzugten Verfahren werden die Teilschritte des Extrapolierens und/oder des Interpolierens für andere Interpolationszeitpunkte wiederholt. Um zeitlich veränderliche Vorgänge zu erfassen, wird die Interpolation für alle gewünschten Zeitpunkte wiederholt.

In einer weiteren bevorzugten Ausführungsform werden aus dreidimensionalen Messdaten durch Mittelung in einer Koordinatenrichtung zweidimensionale Bereiche eines Strömungsfeldes berechnet. Bei einer zweidimensionalen Strömung kann dann aus der 3-D Navier-Stokes-Gleichung der dort enthaltene Druck eliminiert werden, wobei als physikalische Größen die Stromfunktion und die Rotation eingeführt werden.

Im Ergebnis entsteht ein gekoppeltes Differentialgleichungssystem, welches aus einer Transportgleichung für die Rotation und der Stromfunktionsgleichung besteht. Dieses Differentialgleichungssystem kann für die zweidimensionalen inkompressiblen Strömungen mit üblichen mathematischen Methoden gelöst werden.

Mehrere Messungen können für die zeitliche Interpolation bevorzugt zeitlich hintereinander durchgeführt werden. Damit wird der zeitliche Verlauf der Strömungsgeschwindigkeit an einem Ort oder an einer Reihe von Orten erhalten.

Um das zu untersuchende Gebiet besonders gut abzudecken können für die räumliche Interpolation bevorzugt auch Messungen an verschiedenen Orten durchgeführt werden. Dies kann zeitgleich oder auch zeitlich hintereinander geschehen, je nach den Möglichkeiten der Messsysteme.

Insbesondere werden die oben genannten Aufgaben auch durch ein Messsystem zur Vermessung eines eindimensionalen (linienhaften) oder mehrdimensionalen (zwei- oder dreidimensionalen) Strömungsfeldes gelöst, aufweisend mindestens eine Messvorrichtung zur Bestimmung der lokalen Strömungsgeschwindigkeit des Strömungsfeldes an mehreren bestimmten Orten und/oder zu mehreren bestimmten Zeiten als Messwerte und eine Auswerteeinheit, auf der örtliche und/oder zeitliche Interpolationsverfahren ablaufen, die auf einem fluiddynamischen Modell basieren, um die Messwerte auf örtliche Bereiche zu interpolieren, in denen keine Messung durchgeführt wurde und/oder auf Zeitpunkte zu interpolieren zu denen keine Messung durchgeführt wurde.

Mit dem erfindungsgemäßen Messsystem ergeben sich im die gleichen Vorteile, wie sie schon oben in Bezug auf das Messverfahren beschrieben wurden.

Bevorzugt basiert das fluiddynamische Modell der örtlichen und/oder zeitlichen Interpolationsverfahren auf einer Stromfunktions-Rotations-Gleichung der Navier-Stokes-Gleichung.

Die Messwerte und deren zeitlichen und/oder deren örtlichen Ableitungen legen bevorzugt alle notwendigen Randbedingungen zur Lösung der Stromfunktions-Rotations-Formulierung der Navier-Stokes-Gleichung fest. Damit kann das gekoppelte Differentialgleichungssystem der Stromfunktions-Rotations-Formulierung der Navier-Stokes-Gleichung gelöst werden.

Die Messvorrichtung umfasst bevorzugt mindestens einen der folgenden Sensoren:

a) Sensoren zur punktweisen Messung, bevorzugt Hitzdraht-Anemometer, Flügelrad-Anemometer, Akustische-Doppler-Anemometer oder Laser-Doppler-Anemometer;

b) Sensoren zur linienweisen Messung, bevorzugt Akustische-Doppler-Profiler, Doppler LIDAR oder Radar;

c) Sensoren zur flächenhaften Messung, bevorzugt Particle-Image-Velocimetry-Systeme (PIV); und/oder

d) Sensoren zur räumlichen Messung, beispielsweise im Raum angeordnete punktförmige Sensoren.

Bevorzugt wird das oben genannte Messverfahren und/oder das oben genannte Messsystem für einen der folgenden Anwendungsfälle verwendet:

a) Messung von Fluid-Strömungsfeldern in Gewässern oder im Luftraum;

b) Messungen von Strömungsfeldern bei denen photographische Verfahren verwendet werden;

c) Messung von Strömungsfeldern von umströmten oder durchströmten Körpern;

d) Windmessungen in der Meteorologie;

e) Messung von Einspritzvorgängen, beispielsweise für Einspritzvorgänge in der Motorentechnik;

f) Messung von Rohrströmungen, beispielsweise in Pipelines;

g) Messung von Wirbelschleppen von Verkehrs- oder Transportmitteln, beispielsweise von Zügen oder Flugzeugen;

h) Verdichten von Messwerten vor mathematischen Simulationen, beispielsweise für numerische Simulationen von Wetterdaten

i) Messung von Strömungsfeldern in Windkanälen.

Die Messung von Strömungsfeldern von Fluiden beispielsweise in Gewässern oder im Luftraum kann sowohl in der Natur (Freifeld-Messungen) als auch unter Laborbedingungen erfolgen.

## 4. Kurze Beschreibung der Zeichnungen

Im Folgenden werden bevorzugte Ausführungsformen mit Bezugnahme auf die Zeichnungen beschrieben, in denen zeigt:

Fig. 1    ein Ablaufdiagramm einer bevorzugten Ausführungsform des erfindungsgemäßen Messverfahrens;

Fig. 2    eine symbolische Darstellung eines Strömungsfeldes mit linienförmig angeordneten Messvorrichtungen;+

Fig. 3    ein Ablaufdiagramm des Interpolationsschrittes aus Fig. 1;

Fig. 4    eine symbolische Darstellung eines Messgebiets mit unterschiedlichen Messvorrichtungen;

Fig. 5    das Messgebiet aus Fig. 4 mit dargestellten Interpolationspunkten;

Fig. 6    das Messgebiet aus Fig. 4 mit dargestellten Messergebnissen eines bestimmten Zeitintervalls;

Fig. 7    das Messgebiet aus Fig. 4 mit auf die Interpolationspunkte extrapolierten Messwerten;

Fig. 8    das Messgebiet aus Fig. 4 mit dem Ergebnis der Interpolation für alle Interpolationspunkte zu einem Zeitpunkt $T_1$; und

Fig. 9    das Messgebiet aus Fig. 4 mit dem Ergebnis der Interpolation für alle Interpolationspunkte zu einem Zeitpunkt $T_2$.

**5. Beschreibung von bevorzugten Ausführungsformen**

Im Folgenden werden bevorzugte Ausführungsformen der Erfindung mit Bezug auf die Figuren beschrieben.

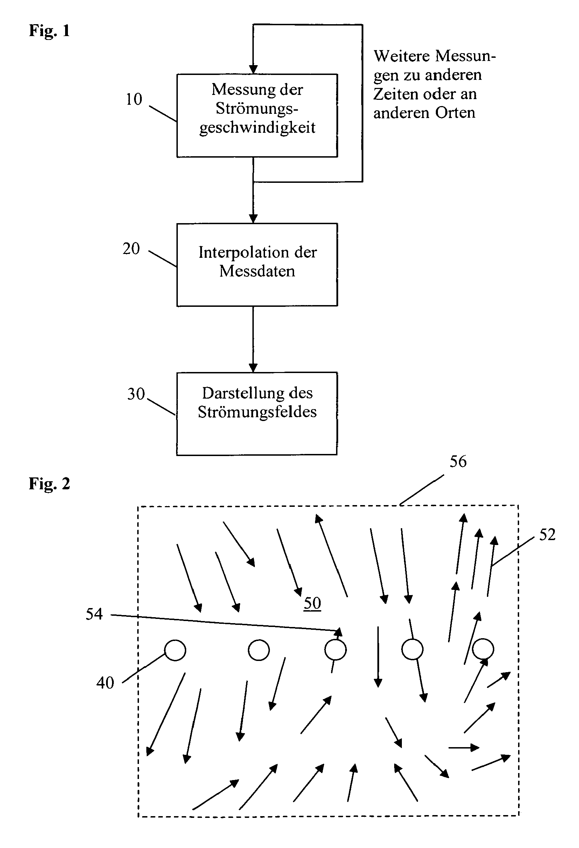

Wie in Fig. 1 dargestellt, werden zunächst im Schritt 10 Messungen der Strömungsgeschwindigkeit an einzelnen Messorten 40 (einzelne Punkte oder Linien) durchgeführt.

Dann wird, wie im Schritt 20 dargestellt, bei hinreichender zeitlicher Messpunktdichte ein Interpolationsverfahren verwendet, das auf einem fluiddynamischen Modell basiert, um den Zeitverlauf der Strömungsgeschwindigkeit und ihrer abgeleiteten Größen zu bestimmen. Für eine dafür nicht hinreichende Messpunktdichte werden Zeitverläufe und Zeitkonstanten von Elementarlösungen der Navier-Stokes-Gleichung, z.B. für das Abklingen der Rotationsstärke, für die zeitliche Interpolation der Rotation, aber auch als Ansatz für die Zeitfunktion der Interpolation der Strömungsgeschwindigkeit verwendet.

Das bevorzugte Interpolationsverfahren setzt, wie später genauer beschrieben, auf der grundlegenden Methodik der Stromfunktions-Rotations-Formulierung (Stromfunktions-Vorticity-Formulierung) der Navier-Stokes-Gleichung auf.

Unter den beschriebenen Voraussetzungen ist zur Interpolation der Strömungsmesswerte die Kenntnis der Stromfunktion (integraler Parameter des Geschwindigkeitsfeldes bzw. die Strömungsgeschwindigkeiten sind Gradienten der Stromfunktion) und der Rotation (lineare Kombination der Gradienten der Strömungsgeschwindigkeit) notwendig.

Das Verfahren der fluiddynamischen Interpolation kann bevorzugt dann eingesetzt werden wenn die eingesetzten Messverfahren die Bestimmung der Rotation der Strömung am Messort ermöglichen (z.B. durch mehrere zueinander geneigte linienweise Messverfahren oder (annähernd) gleichzeitige Strömungsmessungen in der Umgebung eines Messortes (benachbarte Aufstellung von mind. 3 Strömungssensoren).

Ebenso wird für eine räumliche Interpolation des Geschwindigkeits- und Rotationsfeldes zwischen den Messorten / -linien für gleiche Zeitpunkte ein analoger Ansatz verwendet.

Abschließend wird ein Abgleich der punktuellen Interpolationsergebnisse durchgeführt und das Interpolationsverfahren iterativ fortgesetzt. Neben den Interpolationsergebnissen für Strömungsgeschwindigkeit (2-D) können dann weitere abgeleitete Strömungskenngrößen berechnet werden.

Diese Strömungskenngrößen werden als Strömungsfeld 50 innerhalb eines Gebietes 56 dargestellt, wie es im Schritt 30 angedeutet ist.

In Fig. 2 ist ein beispielhaftes zweidimensionales Strömungsfeld 50 dargestellt, bei dem Strömungsvektoren 52 die Richtung und Geschwindigkeit der Strömung an den jeweiligen Orten darstellen.

Zur Messung des Strömungsfeldes 50 werden Sensoren verwendet, die an den dargestellten Messorten 40 angeordnet werden. Diese Sensoren messen die Strömungsgeschwindigkeit als Vektor aus Richtung und Betrag der Geschwindigkeit an den jeweiligen Messorten 40, wie beispielsweise durch den Vektor 54 angedeutet. Aus diesen Messwerten werden dann nach dem erfindungsgemäßen Verfahren auf andere Orte oder andere Zeiten interpoliert.

Das bevorzugten Messverfahren lässt sich besonders einfach anwenden, wenn bevorzugt die folgenden Voraussetzungen erfüllt sind:

Das 3-dimensionale Strömungsfeld sollte mindestens in einer Dimension eine schwach ausgeprägte bzw. homogene Strömungskomponente aufweisen. Die Verteilung der Strömungsgeschwindigkeit über diese Dimension besitzt eine verschwindende Standardabweichung. Orientierungsänderungen dieser Dimension in einem Weltkoordinatensystem sind zulässig.

Der Abstand der Messpunkte/-linien untereinander sollte so gewählt sein, dass aufzulösende Strömungsphänomene zumindest teilweise erfasst werden.

Einflüsse der Kompressibilität des Fluids sollten vernachlässigbar sein. Das Fluid sollte für den Anwendungsfall als inkompressibel beschrieben werden können.

Das Verfahren interpoliert zweidimensionale Messdaten der ebenen Strömungsgeschwindigkeit (u, v), die an einer Vielzahl von eng benachbarten Messpunkten (x, y) so vorliegen, dass die lokalen örtlichen Ableitungen der Geschwindigkeiten (du/dx, du/dy, dv/dx, dv/dy) ebenfalls bestimmt werden können. Die durch die vorhandenen Messorte 40 abgedeckte Fläche des gesamten Untersuchungsgebietes 54 (Fläche, auf der die ebenen Strömungsgeschwindigkeiten bekannt gemacht werden sollen) beträgt üblicherweise weniger als 20% der Gesamtfläche (sollte aber mehr als 5% betragen). An den verfügbaren Messorten 40 muss nicht notwendigerweise zeitgleich gemessen werden. Insgesamt sollte das Verhältnis von Gesamtdatenumfang (zu interpolierende Datenpunkte und gemessene Datenpunkte) zu Messdatenumfang das Verhältnis von 20:1 nicht überschreiten.

Ausgangspunkt des Verfahrens sind daher:

- N Messorte 40 mit den Koordinaten $(x_i, y_i, i=1,..., N)$
- M Messzeitpunkte $t_j$ $(j = 1, ... , M)$
- Mess- oder Berechnungswerte einer zweidimensionalen Strömungsgeschwindigkeit $(u_{i,j}, v_{i,j})$

Die Inter- und Extrapolation der Messdaten auf das Untersuchungsgebiet innerhalb eines Zeitraumes $T_B < T < T_E$, wobei $T_B >= \min(t_j)$ und $T_E <= \max(t_j)$ sind, wird für ein quadratisches Netz von insgesamt P Interpolationspunkten mit den Koordinaten $(X_k, Y_k, k = 1,..., P)$ durchgeführt.

An den einzelnen Gitterpunkten wird ein Flag $F_k$ gesetzt, der kennzeichnet, ob der jeweilige Interpolationspunkt zum Untersuchungsgebiet, zum Rand des Untersuchungsgebietes oder nicht zum Untersuchungsgebiet gehört.

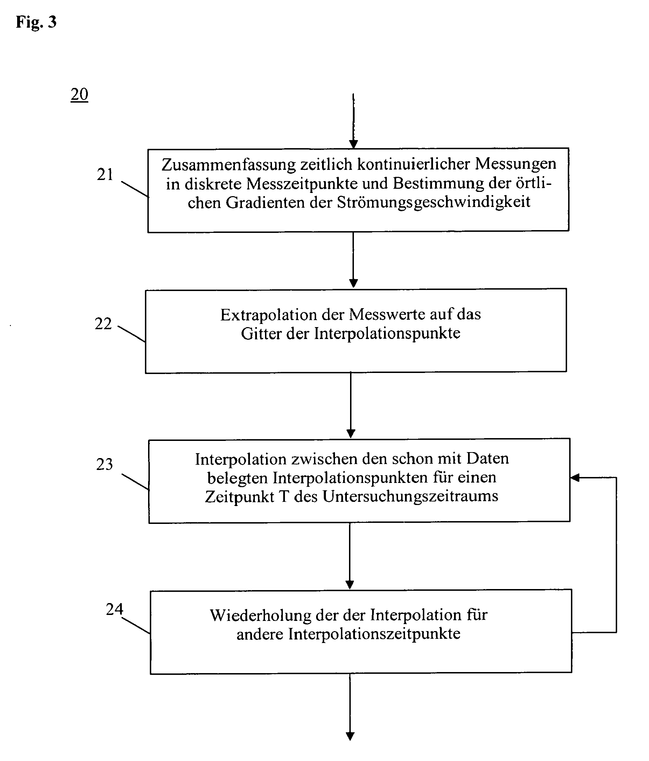

Der Interpolationsschritt 20 gliedert sich bevorzugt in 4 Teilschritte 21, 22, 23 und 24, die in Fig. 3 dargestellt sind:

### 1. Teilschritt 21

Im ersten Teilschritt 21 werden zeitlich kontinuierlicher Messungen in diskrete Messzeitpunkte zusammengefasst und örtliche Gradienten der Strömungsgeschwindigkeit bestimmt.
Messzeitpunkte, die sich

a) örtlich als kontinuierlich betrachten lassen (z.B. kontinuierlich gemessen entlang eines kontinuierlich verfolgten Weges oder mit kleinen Ortsschwankungen um einen fixen Messpunkt) und die sich

b) zeitlich um weniger als 0.42% einer äußeren, für die ablaufenden Strömungsvorgänge bestimmenden, Periodendauer unterscheiden,

werden jeweils zu einem Zeitpunkt zusammengefasst. Beispielsweise werden bei einer Periodendauer von 8 Stunden die innerhalb dieser Zeitreihe anfallenden Messwerte in einem 2-Minuten-Raster zusammengefasst. Innerhalb eines Rastersegmentes haben danach die Messwerte die gleiche Zeit, werden also als isochron betrachtet.

Von allen Messwerten innerhalb eines Rastersegmentes werden die Strömungsvektoren und die örtlichen Gradienten $u_{ij}, v_{ij}, du_{ij}/ds_{ij}, dv_j/ds_{ij}, du_{ij}/dx_{ij}, du_{ij}/dy_{ij}, dv_j/dx_{ij}, dv_j/dy_{ij}$. dem mittleren Zeitpunkt dieses Rastersegmentes zugeordnet. Hierbei ist $ds_{ij}$ das Wegdifferential der Messwerte. Die Differentialquotienten werden nach üblichen numerischen Verfahren berechnet.

### 2. Teilschritt 22

Im zweiten Teilschritt 22 werden für einen Zeitpunkt innerhalb des Zeitrasters die Messwerte 6 in der Umgebung eines Interpolationspunktes 5 auf das Gitter der Interpolationspunkte 5 extrapoliert.

Die Extrapolation der Messwerte 6 auf das Gitter der Interpolationspunkte 5 erfolgt in einem zonengewichteten, von einem an die radiale Abhängigkeit von Strömungsgeschwindigkeiten in einem Oseen-Wirbel implizierten, Verfahren. Um den k-ten Interpolationspunkt 5 $(X_k, Y_k, k = 1,..., P)$ werden L radiale Abschnitte $a_r = d_{sk}:d_{sk}:D_{sk}$ gebildet, wobei $d_{sk} = \min(f_1 \max(ds_{ij}), f_2 D_{sk})$, $D_{sk} = f_3 d_{sg}$, $d_{sg}$ die Gitterkonstante des Gitters der Interpolationspunkte 5 und die f numerische Konstanten sind ($0 < f_1 < 100 (= 1.5)$, $0 < f_2 < 10 (= 1.0)$, $0 < f_3 < 5 (= .75)$). Messwerte 6, die an Messorten liegen, die innerhalb einer Nahzone (Abstand ist kleiner als $d_{sk}$) um den jeweiligen Interpolationspunkt liegen, werden entsprechend

$$U_k\big|_N = \frac{1}{N_a} \sum_{i=1}^{N_a} \left( u_i - \xi_i \left( \frac{du}{dx} \right)_i - \eta_i \left( \frac{du}{dy} \right)_i \right)$$

$$V_k\big|_N = \frac{1}{N_a}\sum_{i=1}^{N_a}\left(v_i - \xi_i\left(\frac{dv}{dx}\right)_i - \eta_i\left(\frac{dv}{dy}\right)_i\right)$$

auf den Interpolationspunkt extrapoliert. Dabei ist $N_a$ die Anzahl der Messpunkte, die innerhalb der Nahzone liegt. Die Koordinaten $\xi_i$ und $\eta_i$ sind die Koordinaten der Messorte in einem lokalen Koordinatensystem mit dem jeweiligen Interpolationspunkt als Ursprung.

Für die Extrapolation der Messwerte 6 in den insgesamt L Fernzonen (mittlerer Abstand zum Interpolationspunkt $a_r$) auf den Interpolationspunkt 5 wird ein abstandsgewichtetes Verfahren verwendet. Es ist dann

$$U_k\big|_F = \frac{1}{L}\sum_{l=1}^{L}\left(\frac{1}{N_a}\sum_{i=1}^{N_a}\left(u_i - \xi_i\left(\frac{1}{N_a}\sum_{i=1}^{N_a}\left(\frac{du}{dx}\right)_i\right)_l - \eta_i\left(\frac{1}{N_a}\sum_{i=1}^{N_a}\left(\frac{du}{dy}\right)_i\right)_l\right)\right)\frac{d_{sk}}{a_{r_l}}$$

$$V_k\big|_F = \frac{1}{L}\sum_{l=1}^{L}\left(\frac{1}{N_a}\sum_{i=1}^{N_a}\left(v_i - \xi_i\left(\frac{1}{N_a}\sum_{i=1}^{N_a}\left(\frac{dv}{dx}\right)_i\right)_l - \eta_i\left(\frac{1}{N_a}\sum_{i=1}^{N_a}\left(\frac{dv}{dy}\right)_i\right)_l\right)\right)\frac{d_{sk}}{a_{r_l}}$$

Die Geschwindigkeit am Interpolationspunkt 5 ist dann das arithmetische Mittel aus der Geschwindigkeitsinterpolation aus der Nahzone sowie der Geschwindigkeitsinterpolation aus der Fernzone.

Als Ergebnis des 2. Teilschrittes 22 des Verfahrens werden die zu einem Zeitpunkt auf den Interpolationspunkt 5 extrapolierten Messergebnisse erhalten.

3. Teilschritt 23

Im 3. Teilschritt 23 wird eine Interpolation zwischen den schon mit Daten belegten Interpolationspunkten 5 für einen Zeitpunkt T des Untersuchungszeitraumes vorgenommen.

Mit den Ergebnissen des 2. Teilschrittes 22 des Interpolationsschritts 20 steht an einigen Interpolationsgitterpunkten k eine Zeitserie der Strömungsgeschwindigkeiten ($U_k$, $V_k$) zur Verfügung. Aus dieser Zeitserie wird durch Interpolation die Strömungsgeschwindigkeit am Interpolationsgitterpunkt zum Interpolationszeitpunkt T bestimmt. Das Interpolationsverfahren ist aus den mathematisch verfügbaren Methoden wählbar, z.B. linear für Zeitbereiche von 10 % einer äußeren, für die ablaufenden Strömungsvorgänge bestimmenden, Periodendauer um den Interpolationszeitpunkt T, oder bei einer fehlenden Zeitserie, wenn der Interpolationspunkt nur für einen Zeitpunkt des gesamten Zeitrasters extrapolierte Messwerte enthält, exponentiell abklingend (z.B. auf 1/e bei 25% der äußeren, für die ablaufenden Strömungsvorgänge bestimmenden, Periodendauer).

Durch Differenzenbildung werden Approximationen der Gradienten der Strömungsgeschwindigkeit im Gitter der Interpolationspunkte berechnet, die hier mit $(DU/DX)_k$, $(DU/DY)_k$, $(DV/DX)_k$ und $(DV/DY)_k$ bezeichnet werden. Unter Verwendung einer Umgebung n-ter Ordnung (z.B. 2. Ordnung) um den jeweiligen Interpolationsgitterpunkt werden dann die Geschwindigkeiten für den Zeitpunkt T berechnet. Umgebung n-ter Ordnung bedeutet, dass die bezogen auf den Interpolationsgitterpunkt mit den Indizes i und j alle Gitterpunkte, deren Index sich im Bereich i-n, ..., i-1, i+1, ..., i+n und j-n, ..., j-1, j+1, ..., j+n befindet für die Extrapolation herangezogen wird. Die Geschwindigkeiten werden dann entsprechend

$$U_{k_{i,j}} = \frac{1}{L}\sum_{l=1}^{L}\left(\left(u_l - \xi_l\left(\frac{DU}{DX}\right)_l - \eta_l\left(\frac{DU}{DY}\right)_l\right)\frac{f_4 d_{sg}}{\sqrt{\xi_l^2 + \eta_l^2}}\right)$$

$$V_{k_{i,j}} = \frac{1}{L}\sum_{l=1}^{L}\left(\left(v_l - \xi_l\left(\frac{DV}{DX}\right)_l - \eta_l\left(\frac{DV}{DY}\right)_l\right)\frac{f_4 d_{sg}}{\sqrt{\xi_l^2 + \eta_l^2}}\right)$$

wobei L die Anzahl der im Ergebnis des vorherigen Iterationsganges schon belegten Interpolationsgitterpunkte innerhalb der Umgebung n-ter Ordnung darstellt. Die Koordinaten $\xi_1$ und $\eta_1$ sind die Koordinaten dieser Interpolationsgitterpunkte in einem lokalen Koordinatensystem mit dem jeweiligen Interpolationspunkt (i,j) als Ursprung. Für die Konstante $f_4$ gilt $0 < f_4 < \max(\{X_k\}/d_{sg}, \{Y_k\}/d_{sg})$ (z.B. $f_4 = 1.2$).

Im Ergebnis der einmaligen Durchführung des 3. Teilschrittes sind im Allgemeinen noch nicht alle Interpolationsgitterpunkte mit Daten belegt. Daher wird unter Verwendung aller bisher berechneten Strömungsgeschwindigkeiten zum Interpolationszeitpunkt T der 3. Teilschritt wiederholt. Damit wird das Gitter der Interpolationspunkte iterativ gefüllt. Die Messdaten führen daher zu berechneten Zwischenwerten, die wiederum als neue Eingangswerte in die Iteration mit eingehen. Sind alle Iterationsgitterpunkte mit Strömungsgeschwindigkeiten belegt, können durch Differentiation bzw. Integration abgeleitete Strömungskenngrößen bestimmt werden.

<u>4. Teilschritt 34</u>

Im 4. Teilschritt wird die Iteration entsprechend des 3. Teilschrittes 33 für andere Interpolationszeitpunkte im Zeitraum $T_B < T < T_E$ wiederholt.

Bei der Durchführung der Berechnung im Zeitraum $T_B < T < T_E$ ist es nicht zwingend notwendig zum Zeitpunkt $T = T_B$ zu beginnen. Auch ist es nicht zwingend notwendig beim Übergang von einem Zeitpunkt auf den nächsten Zeitpunkt die bisherigen Interpolationsergebnisse unberücksichtigt zu lassen. Das Verfahren beinhaltet auch die Möglichkeit zuvor gewonnene Interpolationsergebnisse als Messdaten für die nachfolgenden Interpolationen zu verwenden.

Ergebnisdarstellungen können mehrdimensional bereitgestellt werden (räumlich und zeitlich).

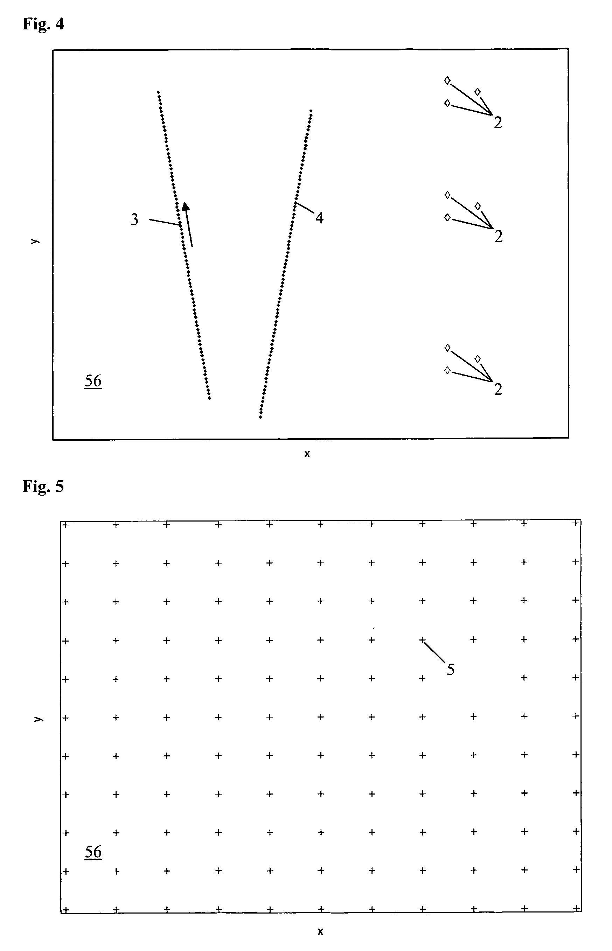

Nachfolgend wird anhand der Figuren 4 - 9 beispielhaft ein typischer Ablauf einer 2-dimensionalen Strömungserfassung gemäß dem beschriebenen Verfahren dargestellt.

Zu diesem Zweck wird, wie in Fig. 4 dargestellt, Strömungsmesstechnik (Sensoren) in dem zu vermessenden Gebiet 56 installiert und / oder eine Fernmesstechnik (remote sensing) zur Anwendung gebracht. In dem Beispiel einer Strömungsvermessung eines zweidimensionalen (flächigen) Gebietes 56 können z.B. punktweise Strömungsmessverfahren an festen Orten 2 in dem Gebiet 56 installiert werden und oder punktweise Messverfahren nacheinander entlang einer vorgegebenen Bahn 3 durchgeführt werden, wie durch den Pfeil in Fig. 4 angedeutet, und/oder linienweise Messverfahren 4 zur Messung der Strömungsgeschwindigkeit verwendet werden. Auch die Anwendung anderer Systeme bzw. Kombinationen verschiedener Messsysteme sind möglich. Der Abstand der Messpunkte / - linien untereinander sollte so gewählt sein, dass aufzulösende Strömungsphänomene zumindest teilweise erfasst werden.

Unabhängig von der Art des Messsystems liegen im Ergebnis der Anwendung der verschiedenen Messsysteme Datentripel bestehend aus Zeitpunkt, Ort und Strömungsgeschwindigkeitsvektor vor. Im gewählten Beispiel liegen die Messergebnisse der punktweisen Messverfahren 2 in der folgenden Form tabellarisch vor:

(Tabelle 1)

| Zeitpunkt | Koordinate 1 (x) | Koordinate 2 (y) | Komponente 1 des Strömungsvektors (u) | Komponente 2 des Strömungsvektors (v) |
|---|---|---|---|---|
| $t_1$ | $x_1$ | $y_1$ | $u_{1,1}$ | $v_{1,1}$ |
| $t_1$ | $x_2$ | $y_2$ | $u_{1,2}$ | $v_{1,2}$ |
| ... | ... | ... | ... | ... |
| $t_2$ | $x_1$ | $y_1$ | $u_{2,1}$ | $v_{2,1}$ |
| $t_2$ | $x_2$ | $Y_2$ | $u_{2,2}$ | $v_{2,2}$ |
| ... | ... | ... | ... | ... |

An jedem festgelegten Ort 2 werden zeitlich hintereinander ($t_1$, $t_2$) mehrere Messungen durchgeführt, so dass eine zeitliche Abfolge von Messergebnisse für einen festgelegten Ort 2 erhalten wird.

Die Messergebnisse bei Messungen entlang einer vorgegebenen Bahn 3 liegen in der folgenden Form tabellarisch vor:

(Tabelle 2)

| Zeitpunkt | Koordinate 1 (x) | Koordinate 2 (y) | Komponente 1 des Strömungsvektors (u) | Komponente 2 des Strömungsvektors (v) |
|---|---|---|---|---|
| $t_1$ | $x_1$ | $y_1$ | $u_{1,1}$ | $v_{1,1}$ |
| $t_2$ | $x_2$ | $y_2$ | $u_{2,2}$ | $v_{2,2}$ |
| ... | ... | ... | ... | ... |

Hierbei werden die Messungen zu unterschiedlichen Zeiten und zudem an unterschiedlichen Orten durchgeführt.

Bei linienweisen Messverfahren 4 werden beispielsweise die folgenden Ergebnisse erhalten:

(Tabelle 3)

| Zeitpunkt | Koordinate 1 (x) | Koordinate 2 (y) | Komponente 1 des Strömungsvektors (u) | Komponente 2 des Strömungsvektors (v) |
|---|---|---|---|---|
| $t_1$ | $x_1$ | $y_1$ | $u_{1,1}$ | $v_{1,1}$ |
| $t_1$ | $x_2$ | $y_2$ | $u_{1,2}$ | $v_{1,2}$ |
| ... | ... | ... | ... | ... |
| $t_2$ | $x_1$ | $y_1$ | $u_{2,1}$ | $v_{2,1}$ |
| $t_2$ | $x_2$ | $y_2$ | $u_{2,2}$ | $v_{2,2}$ |
| ... | ... | ... | ... | ... |

Zu jedem Zeitpunkt werden gleichzeitig Messergebnisse für mehrere festliegende Orte erhalten.

Die durch die vorhandenen Messorte 2, 3, 4 abgedeckte Fläche des gesamten Untersuchungsgebietes 56 (Fläche, auf der die ebenen Strömungsgeschwindigkeiten ermittelt werden sollen) kann weniger als 20% der Gesamtfläche 56 betragen. Sie sollte aber mehr als 5% betragen, um verlässliche Ergebnisse zu erzielen.

An den verfügbaren Messorten 2, 3, 4 muss nicht notwendigerweise zeitgleich gemessen werden. Insgesamt sollte das Verhältnis von Gesamtdatenumfang (zu interpolierende Datenpunkte und gemessene Datenpunkte) zu Messdatenumfang das Verhältnis von 20:1 nicht überschreiten.

Die Inter- und Extrapolation der Messdaten auf das Untersuchungsgebiet innerhalb eines Zeitraumes $T_B < T < T_E$, wobei $T_B >= \min(t_j)$ und $T_E <= \max(t_j)$ sind, wird für dieses Beispiel ein quadratisches Netz von insgesamt P Interpolationspunkten 5 mit den Koordinaten ($X_k$, $Y_k$, k = 1,..., P) durchgeführt, wie sie in Fig. 5 dargestellt sind. An den einzelnen Gitter- bzw. Interpolationspunkten 5 wird ein Flag $F_k$ gesetzt, der kennzeichnet, ob der jeweilige Interpolationspunkt 5 zum Untersuchungsgebiet 56, zum Rand des Untersuchungsgebietes 56 oder nicht zum Untersuchungsgebiet 56 gehört.

Das Verfahren wird nun mit in den 4 genannten Teilschritten 21, 22, 23, 24 fortgesetzt.

1. Teilschritt 21: Zusammenfassung der zeitlich kontinuierlichen Messungen in diskrete Messzeitpunkte und Bestimmung der örtlichen Gradienten der Strömungsgeschwindigkeit

Messzeitpunkte, die sich

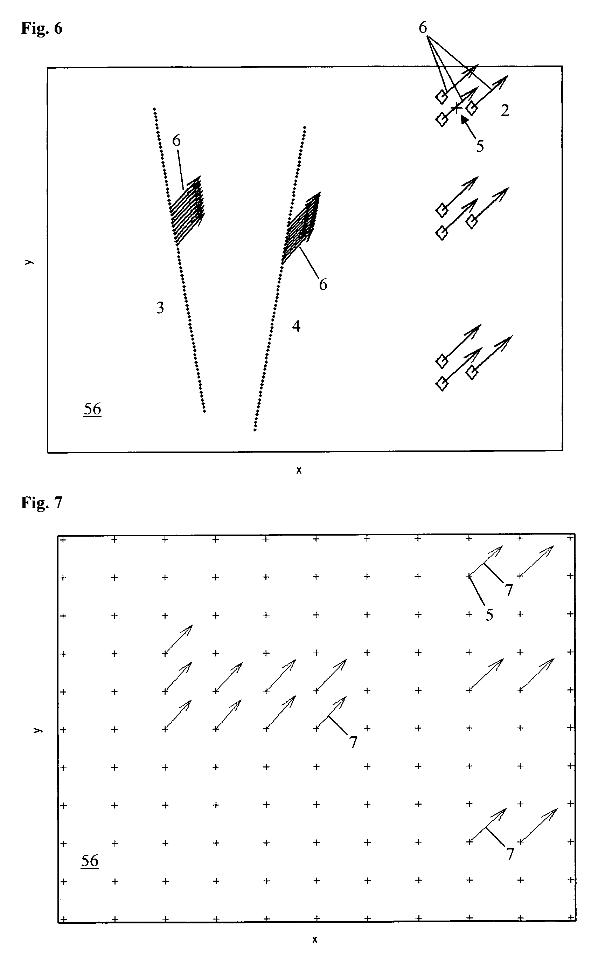

a) örtlich als kontinuierlich betrachten lassen (z.B. kontinuierlich gemessen entlang eines kontinuierlich verfolgten Weges oder mit kleinen Ortsschwankungen um einen fixen Messpunkt 2, 3, 4 bzw. Interpolationspunkt 5) und die sich

b) zeitlich um weniger als 0.42% einer äußeren, für die ablaufenden Strömungsvorgänge bestimmenden, Periodendauer unterscheiden,

werden jeweils zu einem Zeitpunkt zusammengefasst wie dies in Fig. 6 dargestellt ist. Zum Beispiel können bei einer Periodendauer einer Strömung von 8 Stunden die innerhalb dieser Zeit anfallenden Messwerte in einem 2-Minuten - Raster zusammengefasst werden. Innerhalb eines zeitlichen Rastersegmentes haben danach die Messwerte definitionsgemäß die gleiche Zeit, werden also als isochron betrachtet.

Aus diesen zusammengefassten Messwerten werden die benötigten lokalen örtlichen Gradienten (Ableitungen) der Strömungsgeschwindigkeiten nach den Koordinatenrichtungen (du/dx, du/dy, dv/dx, dv/dy) bestimmt. Zur numerischen Realisierung werden die Differentialquotienten als Differenzenquotienten (z.B. $[du/dx]_1 = (u_{12}-u_{11})/(x_2-x_1)$) ausgedrückt.

In dem in Fig. 6 dargestellten Beispiel werden die Messergebnisse 6 der Messungen an den drei durch Rauten dargestellten Messorten 2 in der Umgebung des Punktes 5 für einen Zeitraum $t_{i+n}- t_i = \Delta t_i$ zusammengefasst. Die Zuordnung erfolgt dann zu dem Zeitpunkt $T_i$ (mittlerer Zeitpunkt innerhalb von $\Delta t_i$):

(Tabelle 4)

| Zeitpunkt | Messort | Geschwindigkeit | Gradienten der Strömungsgeschwindigkeit |
|---|---|---|---|
| $T_1$ | $(x_1, y_1)$ | $(u_1, v_1)$ | $[du/dx]_{1,1} = (u_{12}-u_{11})/(x_2-x_1)$<br>$[du/dy]_{1,1} = (u_{12}-u_{11})/(y_2-y_1)$<br>$[dv/dx]_{1,1} = (v_{12}-v_{11})/(x_2-x_1)$<br>$[dv/dy]_{1,1} = (v_{12}-v_{11})/(y_2-y_1)$ |
| $T_1$ | $(x_2, y_2)$ | $(u_2, v_2)$ | $[du/dx]_{1,2} = (u_{13}-u_{12})/(x_3-x_2)$<br>$[du/dy]_{1,2} = (u_{13}-u_{12})/(y_3-y_2)$<br>$[du/dx]_{1,2} = (v_{13}-v_{12})/(x_3-x_2)$<br>$[dv/dy]_{1,2} = (v_{13}-v_{12})/(y_3-y_2)$ |
| $T_1$ | $(x_3, y_3)_1$ | $(u_3, v_3)_1$ | $[du/dx]_{1,3} = (u_{11}-u_{13})/(x_1-x_3)$<br>$[du/dy]_{1,3} = (u_{11}-u_{13})/(y_1-y_3)$<br>$[dv/dx]_{1,3} = (V_{11}-V_{13})/(X_1-X_3)$<br>$[dv/dy]_{1,3} = (V_{11}-V_{13})/(V_1-V_3)$ |
| $T_2$ | $(x_1, y_1)_2$ | $(u_1, v_1)_2$ | $[du/dx]_{2,1} = (u_{22}-u_{11})/(x_2-x_1)$<br>$[du/dy]_{2,1} = (u_{22}-u_{11})/(y_2-y_1)$<br>$[dv/dx]_{2,1} = (v_{22}-v_{11})/(x_2-x_1)$<br>$[dv/dy]_{2,1} = (v_{22}-v_{11})/(y_2-y_1)$ |
| ... | ... | ... | ... |

2. Teilschritt 22 - Extrapolation der Messwerte auf das Gitter der Interpolationspunkte

Die Extrapolation der im 1. Teilschritt 21 bestimmten Werte (Tabelle 4) für die Strömungsgeschwindigkeit und ihre örtlichen Gradienten, auf das Gitter der Interpolationspunkte 5 erfolgt in einem zonengewichteten, von einem an die radiale Abhängigkeit von Strömungsgeschwindigkeiten in einem Oseen-Wirbel implizierten, Verfahren. Um den k-ten Interpolationspunkt 5 ($X_k$, $Y_k$, k = 1,..., P) werden L radiale Abschnitte $a_r = d_{sk}:d_{sk}:D_{sk}$ gebildet, wobei $d_{sk} = \min(f_1 \max(ds_{ij}), f_2 D_{sk})$, $D_{sk} = f_3 d_{sg}$, $d_{sg}$ die Gitterkonstante des Gitters der Interpolationspunkte 5 und die f numerische Konstanten sind (0 < $f_1$ < 100 (= 1.5), 0 < $f_2$ < 10 (= 1.0), 0 < $f_3$ < 5 (= .75)). Messwerte 6, die an Messorten liegen, die innerhalb einer Nahzone (Abstand ist kleiner als $d_{sk}$) um den jeweiligen Interpolationspunkt liegen, werden entsprechend

$$U_k\big|_N = \frac{1}{N_a} \sum_{i=1}^{N_a} \left( u_i - \xi_i \left(\frac{du}{dx}\right)_i - \eta_i \left(\frac{du}{dy}\right)_i \right)$$

$$V_k\big|_N = \frac{1}{N_a} \sum_{i=1}^{N_a} \left( v_i - \xi_i \left(\frac{dv}{dx}\right)_i - \eta_i \left(\frac{dv}{dy}\right)_i \right)$$

auf den Interpolationspunkt 5 extrapoliert. Dabei ist $N_a$ die Anzahl der Messpunkte, die innerhalb der Nahzone liegt. Die Koordinaten $\xi_i$ und $\eta_i$ sind die Koordinaten der Messorte in einem lokalen Koordinatensystem mit dem jeweiligen Interpolationspunkt 5 als Ursprung.

Bezogen auf das Beispiel (s. Tabelle 4) wird aus den Messwerten an den Orten $(x_1, y_1)$, $(x_2, y_2)$ und $(x_3, y_3)$ zum Zeitpunkt $T_1$ die Strömungsgeschwindigkeit am Punkt P zum Zeitpunkt $T_1$ entsprechend der angegebenen Gleichung bestimmt. Es ist dann $N_a = 3$, $\xi_i = x_i - X_P$ und $\eta_i = y_i - Y_P$. Die drei Messwerte liegen alle innerhalb der Nahzone um den Interpolationspunkt 5 (P).

Für die Extrapolation der Messdaten in den insgesamt L Fernzonen (mittlerer Abstand zum Interpolationspunkt $a_r$) auf den Interpolationspunkt wird ein abstandsgewichtetes Verfahren verwendet. Es ist dann

$$U_k\big|_{F} = \frac{1}{L}\sum_{l=1}^{L}\left(\frac{1}{N_a}\sum_{i=1}^{N_a}\left(u_i - \xi_i\left(\frac{1}{N_a}\sum_{i=1}^{N_a}\left(\frac{du}{dx}\right)_i\right)_l - \eta_i\left(\frac{1}{N_a}\sum_{i=1}^{N_a}\left(\frac{du}{dy}\right)_i\right)_l\right)\frac{d_{sk}}{a_{r_l}}\right)$$

$$V_k\big|_{F} = \frac{1}{L}\sum_{l=1}^{L}\left(\frac{1}{N_a}\sum_{i=1}^{N_a}\left(v_i - \xi_i\left(\frac{1}{N_a}\sum_{i=1}^{N_a}\left(\frac{dv}{dx}\right)_i\right)_l - \eta_i\left(\frac{1}{N_a}\sum_{i=1}^{N_a}\left(\frac{dv}{dy}\right)_i\right)_l\right)\frac{d_{sk}}{a_{r_l}}\right)$$

Die Geschwindigkeit am Interpolationspunkt 5 ist dann das arithmetische Mittel aus der Geschwindigkeitsinterpolation aus der Nahzone sowie der Geschwindigkeitsinterpolation aus der Fernzone.

Als Ergebnis des 2. Teilschrittes des Verfahrens wurden Messergebnisse 6 in der Umgebung eines Interpolationspunktes 5 auf den Interpolationspunkt 5 extrapoliert.

In Fig. 7 ist das Ergebnis der Extrapolation der Messwerte 6 auf das Gitter der Interpolationspunkte 5 für (einen) Zeitpunkt $T_i$ dargestellt. Dieser Extrapolation liegen die in Fig. 6 dargestellten Messergebnisse 6 zugrunde, die wie beschrieben, dem Zeitpunkt $T_i$ zugeordnet wurden. Die auf die Interpolationspunkte 5 extrapolierten Messwerte werden mit dem Bezugszeichen 7 bezeichnet.

3. Teilschritt 23 - Interpolation zwischen den schon mit Daten belegten Interpolationspunkten 5 für einen Zeitpunkt $T_i$ des Untersuchungszeitraumes - Anfangsiteration

Mit den Ergebnissen des 2. Teilschritts 22 des Verfahrens steht an einigen Interpolationsgitterpunkten 5, k eine Zeitserie der Strömungsgeschwindigkeiten $(U_k, V_k)$ zur Verfügung. Aus dieser Zeitreihe wird durch ein mathematisches Interpolationsverfahren die Strömungsgeschwindigkeit am Interpolationsgitterpunkt zum gesuchten Interpolationszeitpunkt $T_j$ bestimmt. Das Interpolationsverfahren ist aus den mathematisch verfügbaren Methoden wählbar, beispielsweise eine lineare Interpolation für Zeitbereiche von 10 % einer äußeren, für die ablaufenden Strömungsvorgänge bestimmenden, Periodendauer um den Interpolationszeitpunkt T. Fehlt eine Zeitreihe, d.h. der Interpolationspunkt enthält nur für einen Zeitpunkt des gesamten Zeitrasters extrapolierte Messwerte, wird eine exponentiell abklingende Interpolation verwendet (z.B. auf 1/e bei 25% der äußeren, für die ablaufenden Strömungsvorgänge bestimmenden, Periodendauer).

Durch Differenzenbildung werden Approximationen der Gradienten der Strömungsgeschwindigkeit im Gitter der Interpolationspunkte 5 berechnet, die hier mit $(DU/DX)_k$, $(DU/DY)_k$, $(DV/DX)_k$ und $(DV/DY)_k$, bezeichnet werden. Unter Verwendung einer Umgebung n-ter Ordnung (z.B. 2. Ordnung) um den jeweiligen Interpolationsgitterpunkt 5 werden dann die Geschwindigkeiten für den Zeitpunkt T berechnet.

Umgebung n-ter Ordnung bedeutet hierbei, dass alle Gitter- bzw. Interpolationspunkte 5 für die Extrapolation herangezogen werden, deren Index sich bezogen auf den Interpolationsgitterpunkt mit den Indizes i und j, sich im Bereich i-n, ..., i-1, i+1, ..., i+n und j-n, ..., j-1, j+1, ..., j+n befindet.

Die Geschwindigkeiten werden dann entsprechend

$$U_{k_{i,j}} = \frac{1}{L}\sum_{l=1}^{L}\left(\left(u_l - \xi_l\left(\frac{DU}{DX}\right)_l - \eta_l\left(\frac{DU}{DY}\right)_l\right)\frac{f_4 d_{sg}}{\sqrt{\xi_l^2 + \eta_l^2}}\right)$$

$$V_{k_{i,j}} = \frac{1}{L}\sum_{l=1}^{L}\left(\left(v_l - \xi_l\left(\frac{DV}{DX}\right)_l - \eta_l\left(\frac{DV}{DY}\right)_l\right)\frac{f_4 d_{sg}}{\sqrt{\xi_l^2 + \eta_l^2}}\right)$$

wobei L die Anzahl der im Ergebnis des vorherigen Iterationsganges schon belegten Interpolationsgitterpunkte 5 innerhalb der Umgebung n-ter Ordnung darstellt. Die Koordinaten $\xi_1$ und $\eta_1$ sind die Koordinaten dieser Interpolationsgitterpunkte in einem lokalen Koordinatensystem mit dem jeweiligen Interpolationspunkt (i, j) als Ursprung. Für die Konstante $f_4$ gilt $0 < f_4 < \max(\{X_k\}/d_{sg}, \{Y_k\}/d_{sg})$ (z.B. $f_4 = 1.2$).

Im aufgeführten Beispiel aus dem Ergebnis des 2. Teilschrittes 22 des Verfahrens ersichtlich, dass entweder eine ununterbrochene Zeitreihe von Strömungswerten an den Interpolationspunkt P (Abb. 3, Nr. 6) entstanden ist, wie in Tabelle 5 dargestellt:

(Tabelle 5)

| Zeitpunkt | Koordinate 1 (x) | Koordinate 2 (y) | Komponente 1 des Strömungsvektors (u) | Komponente 2 des Strömungsvektors (v) |
|---|---|---|---|---|
| $T_1$ | $X_1$ | $Y_1$ | $U_{1,1}$ | $V_{1,1}$ |
| $T_2$ | $X_1$ | $Y_1$ | $U_{1,2}$ | $V_{1,2}$ |
| $T_3$ | $X_1$ | $Y_1$ | $U_{1,3}$ | $V_{1,3}$ |
| $T_4$ | $X_1$ | $Y_1$ | $U_{1,4}$ | $V_{1,4}$ |
| ... | ... | ... | ... | ... |

Oder es können bei der Verwendung von punktförmigen Messungen entlang einer Bahn 3 (sh. Fig. 4 und 6) einzelnen Interpolationspunkten 5, die in der Umgebung des Messprofils liegen, zu bestimmten Zeitpunkten Messwerte 6 zugeordnet werden.

Die dann entstehende Datentabelle sieht für benachbarte Interpolationspunkte dann exemplarisch wie folgt aus:

(Tabelle 6)

| Zeitpunkt | Koordinate 1 (x) | Koordinate 2 (y) | Komponente 1 des Strömungsvektors (u) | Komponente 2 des Strömungsvektors (v) |
|---|---|---|---|---|
| $T_1$ | $X_1$ | $Y_1$ | $U_{1,1}$ | $V_{1,1}$ |
| $T_{10}$ | $X_1$ | $Y_1$ | $U_{1,10}$ | $V_{1,10}$ |
| $T_{20}$ | $X_1$ | $Y_1$ | $U_{1,20}$ | $V_{1,20}$ |
|  |  |  |  |  |
| $T_2$ | $X_2$ | $Y_2$ | $U_{2,2}$ | $V_{2,2}$ |
| $T_{11}$ | $X_2$ | $Y_2$ | $U_{2,11}$ | $V_{2,11}$ |
| $T_{21}$ | $X_2$ | $Y_2$ | $U_{2,21}$ | $V_{2,21}$ |
| ... | ... | ... | ... | ... |

Durch Interpolation/Extrapolation zwischen den Zeitpunkten $T_2$, $T_{11}$, $T_{21}$ am Ort $(X_2, Y_2)$ können auch für die Zeitpunkte $T_1$, $T_{10}$, $T_{20}$ an diesem Ort Geschwindigkeitswerte bestimmt werden. Gleiches gilt auch sinngemäß für den Ort $(X_1, Y_1)$. Unter Verwendung der nun bestimmten Geschwindigkeitswerte zu jedem Zeitpunkt in der Nähe der Messorte können dann die örtlichen Gradienten der Geschwindigkeit $(DU/DX)_k$, $(DU/DY)_k$, $(DV/DX)_k$ und $(DV/DY)_k$ im Gitter der Interpolationspunkte 5 berechnet werden.

Damit ist die Voraussetzung geschaffen, um das Verfahren nach Teilschritt 2 und 3 (Nah- und Fernfeldinterpolation um den jeweiligen Interpolationspunkt 5, P) analog im Gitter der Interpolationspunkte 5 zu wiederholen.

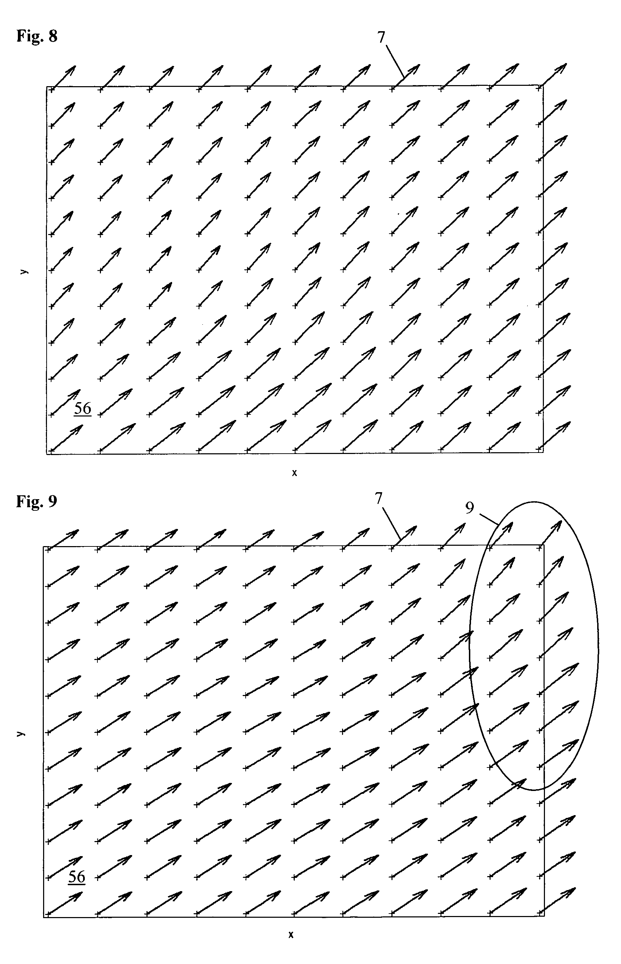

Als Ergebnis dieses Abschnittes liegen dann für einen festgelegten Interpolationszeitpunkt $T_1$ interpolierte Strömungswerte für das gesamte Gitter der Interpolationspunkte 5 vor. Diese Strömungswerte sind durch die Pfeile exemplarisch in Fig. 8 dargestellt.

4. Teilschritt 24 - Wiederholung der Iteration entsprechend des 3. Teilschritts für andere Interpolationszeitpunkte

Das im 3. Teilschritt 23 dargestellte Verfahren wird für jeden gewünschten weiteren Interpolationszeitpunkt $T_j$ wiederholt (z.B. für einen Zeitpunkt $T_2$.)

Im Ergebnis dieser Wiederholung des Verfahrens nach Teilschritt 23 liegt eine Folge von Abbildungen entsprechend Figuren 8 und 9 vor, die einen Film der Strömungszustände im gesamten Interpolationszeitraum $T_B < T < T_E$ ergeben können. Hierbei ist in Fig. 9 der Strömungszustand für einen Zeitpunkt $T_2$ dargestellt, bei dem sich insbesondere im Bereich 9 eine Veränderung der Strömungssituation ergeben hat.

Die gesamte Ergebnismatrix lässt sich für das Beispiel exemplarisch in folgender Tabelle darstellen:

(Tabelle 7)

| Zeitpunkt | Messort | Geschwindigkeit | Gradienten der Strömungsgeschwindigkeit |
|---|---|---|---|
| $T_1$ | $(X_1, Y_1)_1$ | $(U_1, V_1)_1$ | $[DU/DX]_{1,1}, [DU/DY]_{1,1}$ <br> $[DV/DX]_{1,1}, [DV/DY]_{1,1}$ |
| $T_1$ | $(X_2, Y_2)_1$ | $(U_2, V_2)_1$ | $[DU/DX]_{1,21}, [DU/DY]_{1,2}$ <br> $[DV/DX]_{1,2}, [DV/DY]_{1,2}$ |
| $T_1$ | $(X_3, Y_3)_1$ | $(U_3, V_3)_1$ | $[DU/DX]_{1,3}, [DU/DY]_{13}$ <br> $[DV/DX]_{1,3}, [DV/DY]_{1,3}$ |
| ... | ... | ... | ... |
| $T_2$ | $(X_1, Y_1)_2$ | $(U_1, V_1)_2$ | $[DU/DX]_{2,1}, [DU/DY]_{2,1}$ <br> $[DV/DX]_{2,1}, [DV/DY]_{2,1}$ |
| ... | ... | ... | ... |

Aus dem dieser Darstellung ist ersichtlich, dass nicht nur die Strömungsgeschwindigkeiten (3. Spalte) sondern auch die Gradienten der Strömung (4. Spalte) als Ergebnis vorliegen. Die Gradienten der Strömung können verwendet werden, um, über die Darstellung der reinen Strömungsgeschwindigkeit hinausgehende, charakteristischen Strömungskennwerte zu ermitteln und darzustellen. Diese können beispielsweise die Rotation, Divergenz, Stromfunktion, dynamischer Druck und weitere Kenngrößen sein, die auf Grundlage der Strömungsparameter entsprechend Tabelle 7 berechnet werden.

Anwendungsgebiete des Verfahrens der fluiddynamisch begründeten räumlichen und zeitlichen Interpolation sind z.B.:

- Messung von Fluid-Strömungsfeldern, z.B. zur Gewässervermessung (Erstellung von Strömungskarten) oder auch im Luftraum;
- Messung von Strömungen mittels photographischer Verfahren, z.B. mittels Particle-Image-Velocimetry (PIV);
- Messungen von Strömungsfeldern, die bei der Umströmung von Körpern entstehen, z.B. bei Fahrzeugen aller Art, Modellen und Bauwerken; oder
- Messungen in der Meteorologie, z.B. Windmessungen.

In Gewässern werden bei allen Arten von Strömungen mittels Strömungssensoren punktuell oder profilierend Strömungsgeschwindigkeiten ermittelt, die räumlich ungleichmäßig verteilt und zeitlich inkonsistent vorliegen können. Als Strömungssensoren können alle Arten von Doppler Geschwindigkeitsmessgeräten oder sonstige geeignete Strömungssensoren verwendet werden.

Diese Messdaten an sich zeigen im Allgemeinen noch keine zeitlich und räumlich zusammenhängende Strömungssituation.

Jedoch können mittels des beschriebenen Interpolationsverfahrens unter Beachtung der beschriebenen Randbedingungen zu verschiedenen Zeitpunkten im Messgebiet 2-dimensionale Strömungskarten berechnet werden. Der Vorteil gegenüber der Anwendung numerischer Modelle und mathematischer Interpolationen ist die Erhöhung der Ergebnisqualität bei geringerem Aufwand und die wesentlich schnellere Ergebnisgenerierung wie beispielsweise Strömungskarten (Vektorbild der Strömungsgeschwindigkeiten), Stromlinie, Darstellung der Rotation (Drehrichtung und Stärke) sowie Darstellung weiterer abgeleiteter Strömungskenngrößen, wie beispielsweise Drücke.

Diese Anwendung umfasst im Speziellen auch Einleiterstellen und die Umströmung von Bauwerken/Objekten. Das Verfahren ist auch zur Anwendung im Labormaßstab geeignet.

Bei photograpischen Verfahren, z.B. Particle-Image-Velocimetry (PIV), werden Geschwindigkeitsinformationen einzelner Partikel im Raum, die der Strömung schlupflos folgen, durch Spuren (Lichtintensitätsspuren) oder durch zeitlich aufeinander folgende Einzelbilder ermittelt. Dies erfolgt üblicherweise durch korrelative (vergleichende) Verfahren.

Mittels des oben beschriebnen Interpolationsverfahrens kann aus den Geschwindigkeitsinformationen der Partikel das Strömungsfeld zweidimensional oder dreidimensional zu jedem Zeitpunkt berechnet werden. Der Vorteil des Verfahrens liegt in der schnellen Ermittlung der Strömungszustände auch in den Zeit- und/oder Ortslücken der Aufnahmen.

Bei der Strömung und Umströmung von Objekten und Bauwerken kommen zur Messung von Strömungen unterschiedliche Strömungsmesssysteme zum Einsatz, die punktuell oder linienhaft messen, z.B. Hitzdraht-, Flügelrad-, Ultraschall-Anemometer-, Laser-Doppler-, Doppler-LIDAR- oder Radar-Sensoren, Akustischer Doppler-Current-Profiler sowie die bereits oben beschriebene Particle Image Velocimetry (PIV).

Ziel ist die Ermittlung von räumlichen Luftströmungen (Geschwindigkeit, Richtung) und deren zeitlichen Verhaltens. Beispielhaft ist die Messung von Wirbelschleppen von Flugzeugen zu nennen.

Beispielsweise sollten für Gefahreneinschätzungen die Ergebnisse derartige Messungen möglichst zeitnah, möglichst in Echtzeit, zur Verfügung stehen.

An bestimmten Standorten können Messungen in unterschiedlichen Höhen und zu unterschiedlichen Zeiten durchgeführt werden. Aus diesen Messungen an sich kann noch keine zusammenhängende zeitliche und räumliche Erfassung der Strömungsituation erfolgen.

Mittels des erfindungsgemäßen Messverfahrens können die gemessenen Messwerte auf örtliche Bereich oder Zeitpunkte interpoliert werden, in denen keine Messung erfolgt ist, wodurch die Strömungssituation zusammenhängend abgebildet werden kann. Das Messverfahren kann auf die gesamte Applikationsbreite in der Natur und im Modellmaßstab zur Erfassung von freien, instationären Strömungen, Umströmungen von Körpern (z.B. Modellen im Windkanal, Transportmittel aller Art, Bauwerken etc.), Wirbelausbildung, Wirbelschleppen und Ähnliches eingesetzt werden.

Das erfindungsgemäße Verfahren kann auch in der Meteorologie eingesetzt werden. Bei der Berechnung von Wettervorhersagen werden üblicherweise numerische Modelle angewandt. Um eine Berechnung durchzuführen werden Randwerte - Messwerte der Atmosphäre in einem Netzwerk von Bodenmessstationen erfasst (Windgeschwindigkeit, Temperatur, Luftdruck, Luftfeuchtigkeit, Niederschlagsmengen etc.). Zusätzlich werden Daten von Wettersatteliten, Verkehrsflugzeugen, Wetterbooten verwendet.

Der Nachteil der bislang verwendeten numerischen Modelle ist, dass sie die Prozesse in der Atmosphäre nachbilden müssen. Damit können besonders lokale Abweichungen zu den realen Strömungsverhältnissen auftreten. Die örtliche Auflösung bei der Berechnung ist gering.

Das erfindungsgemäße Verfahren, kann die Datendichte (von der Vergangenheit bis zum Ist-Zustand) erhöhen, indem auf der Basis vorhandener Strömungsdaten zusätzliche Strömungsdaten zeitlich und örtlich berechnet werden. Der Vorteil ist, dass unterhalb der räumlichen Auflösung der numerischen Modelle der Ist-Zustand schnell und genauer ermittelt werden kann. Die Generierung von zusätzlichen Daten als Eingangsdaten für die numerischen Modelle verbessert deren Prognose.

Dieses Verfahren kann auch im Modellmaßstab, beispielsweise in Klimakammern, angewendet werden.

**Patentansprüche**

1. Verfahren zur Vermessung eines eindimensionalen oder mehrdimensionalen Strömungsfeldes (50), aufweisend die folgenden Schritte:

   a) Messung (10) der lokalen Strömungsgeschwindigkeit des Strömungsfeldes (50) an mehreren bestimmten Orten (40) und/oder zu mehreren bestimmten Zeiten, um zeitlich und örtlich definierte Messwerte zu erhalten;
   b) Interpolieren (20) der Messwerte auf örtliche Bereiche, in denen keine Messung durchgeführt wurde, mittels eines in einer Auswerteeinheit ablaufenden örtlichen Interpolationsverfahrens, das auf einem fluiddynamischen Modell basiert; und/oder
   c) Interpolieren (20) der Messwerte in zeitlicher Hinsicht auf Zeitpunkte, in denen keine Messung durchgeführt wurde, mittels eines in einer Auswerteeinheit ablaufenden zeitlichen Interpolationsverfahrens, das auf einem fluiddynamischen Modell basiert;
   d) Darstellen (30) der interpolierten Messwerte und/oder abgeleiteter Kenngrößen als eindimensionales oder mehrdimensionales Strömungsfeld.

2. Verfahren gemäß Anspruch 1, wobei das fluiddynamische Modell der örtlichen und/oder zeitlichen Interpolationsverfahren auf einer Stromfunktions-Rotations-Formulierung der Navier-Stokes-Gleichung basiert.

3. Verfahren gemäß Anspruch 2 wobei die Messwerte und deren zeitlichen und/oder deren örtlichen Ableitungen alle notwendigen Randbedingungen für die Lösung der Stromfunktions-Rotations-Formulierung der Navier-Stokes-Gleichung festlegen.

4. Verfahren gemäß einem der Ansprüche 1 - 3, wobei der zeitliche und örtliche Interpolationsschritt (20) den Teilschritt (21) des Zusammenfassens zeitlich kontinuierlicher Messungen in diskrete Messzeitpunkte umfasst.

5. Verfahren gemäß einem der Ansprüche 1 - 4, wobei der zeitliche und örtliche Interpolationsschritt (20) den Teilschritt (21) des Bestimmens der örtlichen Gradienten der Strömungsgeschwindigkeit umfasst.

6. Verfahren gemäß einem der Ansprüche 1 - 5, wobei der zeitliche und örtliche Interpolationsschritt (20) die folgenden Teilschritte umfasst:

   a) Extrapolieren (22) der Messwerte (6) auf ein Gitter von Interpolationspunkten (5); und
   b) Interpolieren (23) zwischen den schon mit Daten belegten Interpolationspunkten für einen Zeitpunkt T des Untersuchungszeitraums.

7. Verfahren gemäß Anspruch 6, wobei die Teilschritte (22) und/oder (23) des Extrapolierens und Interpolierens für andere Interpolationszeitpunkte wiederholt werden.

8. Verfahren gemäß einem der Ansprüche 1 - 7, wobei aus dreidimensionalen Messdaten durch Mittelung in einer Koordinatenrichtung zweidimensionale Bereiche eines Strömungsfeldes (50) berechnet werden.

9. Verfahren gemäß einem der Ansprüche 1 - 8, wobei für die zeitliche Interpolation mehrere Messungen (10) zeitlich hintereinander durchgeführt werden.

10. Verfahren gemäß einem der Ansprüche 1 - 9, wobei für die örtliche Interpolation mehrere Messungen (10) an verschiedenen Orten (40) durchgeführt werden.

11. Messsystem zur Vermessung eines eindimensionalen oder mehrdimensionalen Strömungsfeldes (50), aufweisend:

   a) mindestens eine Messvorrichtung zur Bestimmung der lokalen Strömungsgeschwindigkeit des Strömungsfeldes (50) an mehreren bestimmten Orten (40) und/oder zu mehreren bestimmten Zeiten als Messwerte;
   b) eine Auswerteeinheit, auf der örtliche und/oder zeitliche Interpolationsverfahren ablaufen, die auf einem fluiddynamischen Modell basieren, um die Messwerte auf örtliche Bereiche zu interpolieren, in denen keine Messung durchgeführt wurde und/oder um die Messwerte auf Zeitpunkte zu interpolieren zu denen keine Messung durchgeführt wurde.

12. Messsystem gemäß Anspruch 11, wobei das fluiddynamische Modell der örtlichen und/oder zeitlichen Interpolationsverfahren auf einer Stromfunktions-Rotations-Formulierung der Navier-Stokes-Gleichung basiert.

13. Messsystem gemäß Anspruch 12, wobei die Messwerte und deren zeitlichen und/oder deren örtlichen Ableitungen alle notwendigen Randbedingungen für die Lösung der Stromfunktions-Rotations-Formulierung der Navier-Stokes-Gleichung festlegen.

14. Messsystem gemäß einem der Ansprüche 11 - 13, wobei die Messvorrichtung mindestens einen der folgenden Sensoren umfasst:

   a) Sensoren zur punktweisen Messung, bevorzugt Hitzdraht-Anemometer, Flügelrad-Anemometer, Akustische-Doppler-Anemometer oder Laser-Doppler-Anemometer;
   b) Sensoren zur linienweisen Messung, bevorzugt Akustische-Doppler-Profiler, Doppler LIDAR oder Radar;
   c) Sensoren zur flächenhaften Messung, bevorzugt Particle-Image-Velocimetry-Systeme (PIV); und/oder
   d) Sensoren zur räumlichen Messung.

15. Verwendung eines Messverfahrens gemäß einem der Ansprüche 1 - 10 und/oder eines Messsystems gemäß einem der Ansprüche 11 - 14 für einen der folgenden Anwendungsfälle:

   a) Messung von Strömungsfeldern in Gewässern oder im Luftraum;
   b) Messungen von Strömungsfeldern bei denen photographische Verfahren verwendet werden;

c) Messung von Strömungsfeldern von umströmten oder durchströmten Körpern;
d) Windmessungen in der Meteorologie;
e) Messung von Einspritzvorgängen;
f) Messung von Rohrströmungen;
g) Messung von Wirbelschleppen von Verkehrs- oder Transportmitteln;
h) Verdichtung von Messwerten vor mathematischen Simulationen;
i) Messung von Strömungsfeldern in Windkanälen.

**Fig. 1**

10 → Messung der Strömungsgeschwindigkeit

Weitere Messungen zu anderen Zeiten oder an anderen Orten

20 → Interpolation der Messdaten

30 → Darstellung des Strömungsfeldes

**Fig. 2**

56

52

54

50

40

**Fig. 3**

20

21 — Zusammenfassung zeitlich kontinuierlicher Messungen in diskrete Messzeitpunkte und Bestimmung der örtlichen Gradienten der Strömungsgeschwindigkeit

22 — Extrapolation der Messwerte auf das Gitter der Interpolationspunkte

23 — Interpolation zwischen den schon mit Daten belegten Interpolationspunkten für einen Zeitpunkt T des Untersuchungszeitraums

24 — Wiederholung der der Interpolation für andere Interpolationszeitpunkte

**Fig. 4**

**Fig. 5**

**Fig. 6**

**Fig. 7**

Fig. 8

Fig. 9

Europäisches
Patentamt

**EUROPÄISCHER RECHERCHENBERICHT**

Nummer der Anmeldung

EP 06 00 5621

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 749 014 A (COMMISSARIAT A L'ENERGIE ATOMIQUE) 18. Dezember 1996 (1996-12-18) | 1-15 | INV. G01P5/00 |
| Y | * Seite 1, Absatz 2 - Seite 5, Zeile 19 * <br> * Seite 8, Zeile 11 - Seite 6, Zeile 44 * <br> * Seite 11, Zeile 27 - Seite 13, letzter Absatz * | 1-6,9-13 | |
| X | AFANASYEV Y D ET AL: "A variational filtration and interpolation technique for PIV employing fluid dynamical constraints" EXPERIMENTS IN FLUIDS SPRINGER-VERLAG GERMANY, Bd. 39, Nr. 5, November 2005 (2005-11), Seiten 828-835, XP002393703 ISSN: 0723-4864 * Seite 829, linke Spalte, Absatz 2 - Seite 833, rechte Spalte, letzter Absatz * | 1-15 | |
| X | BURSTEIN P ET AL: "A method of 3D reconstruction of flow velocity fields from color-Doppler ultrasound" PROCEEDINGS OF THE 18TH ANNUAL INTERNATIONAL CONFERENCE OF THE IEEE ENGINEERING IN MEDICINE AND BIOLOGY SOCIETY. `BRIDGING DISCIPLINES FOR BIOMEDICINE' (CAT. NO.96CH36036) IEEE NEW YORK, NY, USA, Bd. 2, 1997, Seiten 869-870 vol.2, XP002393704 ISBN: 0-7803-3811-1 * Seite 869 * * Seite 870, rechte Spalte, Absatz 2 * | 1-3,5, 9-14 | RECHERCHIERTE SACHGEBIETE (IPC) <br><br> G01P |

-/--

Der vorliegende Recherchenbericht wurde für alle Patentansprüche erstellt

| Recherchenort | Abschlußdatum der Recherche | Prüfer |
|---|---|---|
| München | 8. August 2006 | Felicetti, C |

Europäisches
Patentamt

## EUROPÄISCHER RECHERCHENBERICHT

Nummer der Anmeldung

EP 06 00 5621

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | HINO M ET AL: "AN ATTEMPT AT ESTIMATING THE INSTANTANEOUS VELOCITY FIELD OF A NONSTATIONARY FLOW FROM VELOCITY MEASUREMENT AT A FEW POINTS" FLUID DYNAMICS RESEARCH, NORTH-HOLLAND, AMSTERDAM, NL, Bd. 7, Januar 1991 (1991-01), Seiten 101-108, XP000564351 ISSN: 0169-5983 * Seite 101 - Seite 105, Absatz 2 * ----- | 1,11,14 | |
| X | VOLLMERS H: "DETECTION OF VORTICES AND QUANTITATIVE EVALUATION OF THEIR MAIN PARAMETERS FROM EXPERIMENTAL VELOCITY DATA" MEASUREMENT SCIENCE AND TECHNOLOGY, IOP, BRISTOL, GB, Bd. 12, Nr. 8, August 2001 (2001-08), Seiten 1199-1207, XP001208983 ISSN: 0957-0233 * Seite 1199 * * Seite 1203 * ----- | 1-3,5, 9-15 | RECHERCHIERTE SACHGEBIETE (IPC) |
| Y | LECORDIER B ET AL: "ESTIMATION OF THE ACCURACY OF PIV TREATMENTS FOR TURBULENT FLOW STUDIES BY DIRECT NUMERICAL SIMULATION OF MULTI-PHASE FLOW" MEASUREMENT SCIENCE AND TECHNOLOGY, IOP, BRISTOL, GB, Bd. 12, Nr. 9, September 2001 (2001-09), Seiten 1382-1391, XP001208951 ISSN: 0957-0233 * Seite 1384, rechte Spalte - Seite 1386, linke Spalte * ----- -/-- | 1-6,9-13 | |

Der vorliegende Recherchenbericht wurde für alle Patentansprüche erstellt

| Recherchenort | Abschlußdatum der Recherche | Prüfer |
|---|---|---|
| München | 8. August 2006 | Felicetti, C |

EPO FORM 1503 03.82 (P04C03)

**Nummer der Anmeldung**

EP 06 00 5621

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | SPEDDING G R ET AL: "PERFORMANCE ANALYSIS AND APPLICATION OF GRID INTERPOLATION TECHNIQUES FOR FLUID FLOWS" EXPERIMENTS IN FLUIDS, SPRINGER, HEIDELBERG, DE, Bd. 15, Nr. 6, Januar 1993 (1993-01), Seiten 417-430, XP000413762 ISSN: 0723-4864 * Seite 418, rechte Spalte - Seite 419, rechte Spalte * * Seite 426, rechte Spalte - Seite 427, rechte Spalte * ----- | 1,4-6,11 | |
| | | | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 8. August 2006 | Felicetti, C |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 00 5621

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-08-2006

| Im Recherchenbericht angeführtes Patentdokument | Datum der Veröffentlichung | Mitglied(er) der Patentfamilie | Datum der Veröffentlichung |
|---|---|---|---|
| EP 0749014 A | 18-12-1996 | FR 2735568 A1 | 20-12-1996 |

Für nähere Einzelheiten zu diesem Anhang : siehe Amtsblatt des Europäischen Patentamts, Nr.12/82

EPO FORM P0461